Europäisches Patentamt

European Patent Office

Office européen des brevets

(19)

(11) Numéro de publication: **0 093 648**

**A1**

(12) # DEMANDE DE BREVET EUROPEEN

(21) Numéro de dépôt: **83400821.1**

(22) Date de dépôt: **26.04.83**

(51) Int. Cl.³: **H 04 L 1/24**
**H 04 L 1/10**

(30) Priorité: **27.04.82 FR 8207249**

(43) Date de publication de la demande:
**09.11.83 Bulletin 83/45**

(84) Etats contractants désignés:
**DE GB NL**

(71) Demandeur: **LIGNES TELEGRAPHIQUES ET
TELEPHONIQUES L.T.T.
1, rue Charles Bourseul
F-78702 Conflans Ste Honorine(FR)**

(72) Inventeur: **Berlinet, Denis
THOMSON-CSF SCPI 173, bld Haussmann
F-75379 Paris Cedex 08(FR)**

(72) Inventeur: **Gourdon, Claude
THOMSON-CSF SCPI 173, bld Haussmann
F-75379 Paris Cedex 08(FR)**

(72) Inventeur: **Lacassagne, Pierre
THOMSON-CSF SCPI 173, bld Haussmann
F-75379 Paris Cedex 08(FR)**

(72) Inventeur: **Walraet, Jean
THOMSON-CSF SCPI 173, bld Haussmann
F-75379 Paris Cedex 08(FR)**

(74) Mandataire: **Benoit, Monique et al,
THOMSON-CSF SCPI 173, Bld Haussmann
F-75379 Paris Cedex 08(FR)**

(54) Dispositif de surveillance de stations terminales d'une voie de transmission notamment bidirectionnelle.

(57) L'invention a pour objet un dispositif de surveillance en continu du fonctionnement de chacune des stations terminales d'une ligne de transmission numérique.

Elle consiste à émettre sur une voie de service une information représentant la parité de l'information binaire à transmettre, entre des instants prédéfinis, et principalement en la possibilité de lever l'intermination de localisation d'une défaillance (l'une ou l'autre des stations terminales).

Application aux transmissions bidirectionnelles à haut débit d'information.

./...

Croydon Printing Company Ltd.

FIG_1

1

# DISPOSITIF DE SURVEILLANCE DE STATIONS TERMINALES
# D'UNE VOIE DE TRANSMISSION NOTAMMENT BIDIRECTIONNELLE

L'invention a pour objet un dispositif de surveillance de stations terminales d'une voie de transmission, notamment bidirectionnelle.

L'invention concerne la transmission d'informations codées numériquement. Dans certaines applications, notamment les liaisons de grande longueur, à haut débit d'information, par exemple longueur de 600 km et débit de 140 Mbits/s, il est apparu nécessaire d'assurer la qualité de la transmission en disposant le long de la voie, ou ligne, de transmission des répéteurs-régénérateurs dans des stations intermédiaires, et d'exercer une surveillance permanente sur l'état de fonctionnement d'une part des stations terminales et d'autre part de la voie de transmission elle-même.

Pour ce qui est de la surveillance du fonctionnement de la ligne de transmission elle-même, on connaît différents procédés. Un de ces procédés, qui s'applique aux codes à somme numérique bornée, consiste en un contrôle de cette somme numérique. En effet, avec de tels codes, lorsqu'on additionne en continu les états binaires successifs du signal transmis en donnant, par exemple pour des signaux à trois niveaux, un poids +1 pour le niveau haut, un poids 0 pour le niveau moyen et un poids -1 pour le niveau bas, le résultat de cette addition doit toujours être compris entre deux valeurs (par exemple +2 et -3). Lorsqu'une erreur apparaît sur la ligne, les bornes précédentes se décalent d'une unité vers le haut si l'erreur est positive, ou d'une unité vers le bas si l'erreur est négative. En chaque station intermédiaire de régénération, cette somme numérique est contrôlée par un dispositif qui détecte ainsi toute erreur qui pourrait apparaître. En conséquence, quelle que soit la nature de la ligne de transmission, on retiendra que l'on peut connaître, en dehors du dispositif faisant l'objet de l'invention, si elle fonctionne correctement ou non.

Une station terminale d'émission a pour but d'adapter le signal (numérique) à transmettre à la ligne de transmission. Ceci est généralement réalisé en deux parties : un transcodeur et un émetteur proprement dit. Le transcodeur transforme le flux des informations à transmettre, qui sont en général codées en binaire, en un flux codé selon un autre code pour lequel le nombre de combinaisons possibles est supérieur à celui du code binaire de départ. Ainsi qu'il est connu, cette redondance peut être utilisée notamment pour supprimer la composante continue et limiter au maximum le spectre basse fréquence.

La station terminale de réception a pour but de faire l'opération inverse de celle faite à l'émission. Elle est généralement constituée de deux parties : tout d'abord, d'un récepteur proprement dit, puis d'un transcodeur inverse du transcodeur de l'émission.

On connaît dans l'art antérieur des dispositifs de contrôle du bon fonctionnement de ces stations d'émission et de réception. Ces dispositifs consistent généralement pour la station d'émission, à prélever le signal à la sortie de l'émetteur proprement dit avant son introduction dans la ligne de transmission, à l'introduire dans un transcodeur-récepteur de contrôle, et à comparer le signal délivré par ce transcodeur-récepteur de contrôle au signal prélevé avant le transcodeur d'émission. La surveillance de la station de réception d'une ligne de transmission se fait de façon analogue : on utilise un transcodeur-récepteur de contrôle, alimenté également par le signal en provenance de la ligne de transmission, et on compare les résultats fournis respectivement par le transcodeur-récepteur de la station et par le transcodeur-récepteur de contrôle. Le contrôle permanent de l'émission et de la réception, dans une station terminale d'une ligne de transmission bidirectionnelle nécessite donc l'adjonction à cette station de deux transcodeurs-récepteurs de contrôle, le premier affecté à la vérification de l'émission, le second affecté à la vérification de la réception. Ces transcodeurs-récepteurs de contrôle sont du même type que l'organe de réception normal de la ligne, dont on sait que ce sont des organes complexes et coûteux. Ce mode de surveillance est donc onéreux.

Pour pallier cet inconvénient, il est connu de surveiller, à tour de rôle, l'émission ou la réception d'une station terminale avec un unique transcodeur-récepteur de contrôle. Dans le cas où l'on a affaire à plusieurs lignes de transmission aboutissant à la même station terminale, il est également connu d'utiliser un seul transcodeur-récepteur de contrôle surveillant alors, tour à tour, les parties émission et les parties réception de chacune des lignes de transmission. Indépendamment de la complexité du dispositif de commutation auxiliaire qu'il y a lieu de mettre en place dans ce cas, il apparaît que la surveillance n'est pas permanente, mais seulement périodique. Or dans le cas de transmission de signaux numériques, il est très souhaitable de connaître en permanence l'état de fonctionnement des parties émission et des parties réception de chacune des stations terminales.

Une autre solution est connue pour tenter de résoudre ce problème de surveillance : au lieu d'utiliser des transcodeurs-récepteurs de contrôle ayant les mêmes capacités que les organes de réception normaux de la ligne, on utilise des transcodeurs-récepteurs de contrôle simplifiés parce que recevant, non pas tout le signal à débit normal, mais seulement des échantillons du signal, qui peuvent alors être traités à basse vitesse. Cette méthode, un peu moins compliquée a priori que la précédente, est cependant moins efficace dans la plupart des cas. En outre elle ne satisfait pas à l'exigence de permanence de la surveillance d'une station terminale.

L'invention a pour objet une solution à ce problème de surveillance de terminaux de ligne évitant les inconvénients des solutions précédentes, assurant en permanence la surveillance de chacun des organes d'émission-réception de chacune des stations terminales, et utilisant pour sa réalisation des dispositifs électroniques simples.

Plus précisément, l'invention a pour objet un dispositif de surveillance d'au moins deux stations terminales, situées respectivement aux extrémités d'une voie de transmission, la première station terminale comportant au moins un organe de transcodage recevant le signal numérique codé à transmettre et délivrant un deuxième signal exprimé selon un deuxième codage ; la deuxième station terminale comportant au moins un organe de transcodage inverse recevant le deuxième signal et délivrant un troisième signal exprimé selon le codage initial, la première station terminale comportant en outre des moyens d'élaboration d'un quatrième signal qui est une fonction prédéterminée du signal à transmettre ; ce quatrième signal étant transmis à la deuxième station terminale par une voie de service en même temps que le deuxième signal y est transmis par la voie de transmission, la deuxième station terminale comportant en outre des moyens d'élaboration d'un cinquième signal qui est une même fonction prédéterminée du troisième signal et des moyens de comparaison du quatrième signal reçu avec le cinquième signal, fournissant un sixième signal, indiquant une erreur éventuelle de transmission.

L'invention sera mieux comprise par la description suivante, donnée à titre d'exemple non limitatif et illustrée par les figures qui l'accompagnent. Ces figures représentent :

- figure 1, le schéma fonctionnel d'un mode de réalisation du dispositif de surveillance selon l'invention, dans le cas d'une transmission unidirectionnelle ;

- figure 2, le schéma fonctionnel d'un autre mode de réalisation du dispositif de surveillance selon l'invention, dans le cas d'une transmission bidirectionnelle.

Sur ces différentes figures, les mêmes repères désignent les mêmes éléments.

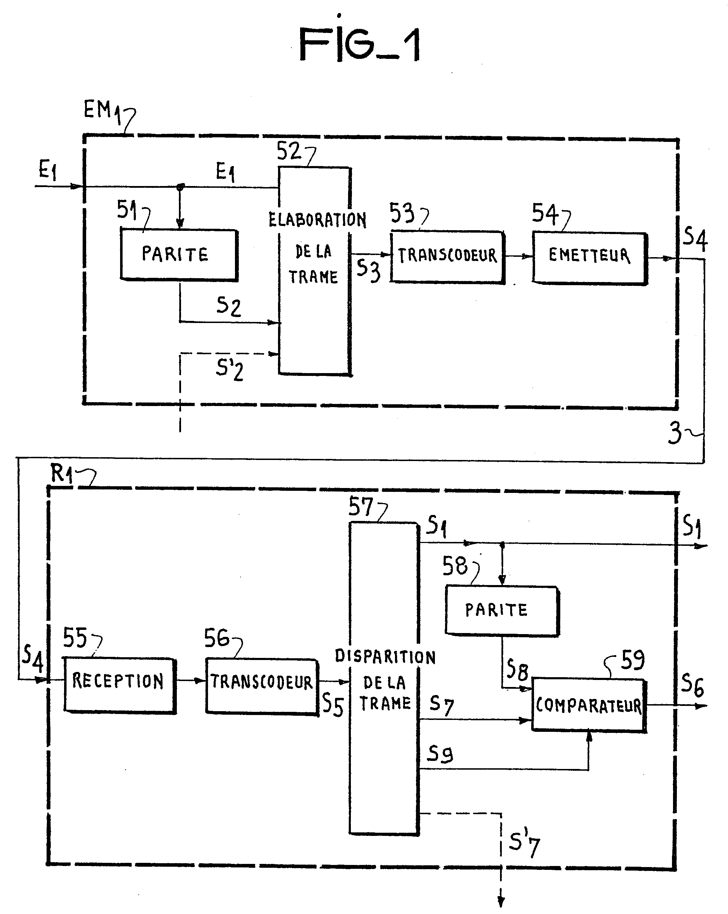

La figure 1 représente donc le schéma fonctionnel du dispositif de surveillance de deux stations terminales d'une ligne de transmission unidirectionnelle selon l'invention.

On distingue sur cette figure une station d'émission $EM_1$ et une station de réception $R_1$, reliées entre elles par une voie de transmission 3 quelconque (câble coaxial, fibre optique ou liaison hertzienne).

La station $EM_1$ reçoit un signal $E_1$ codé numériquement, en général en binaire. Ce signal, une fois transmis, apparaîtra en sortie de la station $R_1$ sous la forme $S_1$. Si la liaison s'effectue sans erreur, $S_1 = E_1$.

Ce signal $E_1$ est appliqué à des moyens 51 qui ont pour fonction d'élaborer un signal $S_2$ qui est fonction prédéfinie du signal d'entrée $E_1$, par exemple sa parité. Ce moyen 51 peut, dans le cas d'un calcul de parité, par exemple être constitué simplement d'une bascule bistable ayant la caractéristique de changer d'état pour un seul sens de changement d'état du signal admis à son entrée.

Selon l'invention, cette fonction $S_2$ du signal d'entrée $E_1$ est transmise en même temps que le signal $E_1$, sur une voie de service. On rappelle que l'on désigne en général par voie de service, ou voie d'ordre, la transmission de signaux annexes à l'information principale, utilisés par exemple pour l'exploitation ou la surveillance de la transmission. Cette voie de service peut bien entendu être transmise sur une voie de transmission distincte de la ligne 3, sous réserve que soit connu l'instant où elle est prélevée.

Toutefois, dans un mode de réalisation préféré, elle est transmise avec l'information principale $E_1$, sur la ligne 3, de la façon décrite ci-dessous.

Le signal $S_2$ et le signal $E_1$ sont appliqués à des moyens 52 d'élaboration d'une trame, qui compriment les informations $E_1$ en laissant des emplacements libres dans lesquels ils insèrent un ou plusieurs bits de voie de service, ainsi que les motifs de repérage des limites de chaque trame, dits "mots de verrouillage de trame" (VT), nécessaires en réception pour pouvoir réaliser l'opération inverse de celle qui est réalisée dans les moyens 52. Le ou les bits de voie de service peuvent être insérés n'importe où dans la trame ; en général, on préfère les placer sensiblement au milieu de la trame (dont le début est marqué par le mot VT) afin de faciliter la récupération du rythme à la réception.

Il est à noter que la voie de service peut contenir d'autres informations que $S_2$, qui sont notées $S'_2$ sur la figure.

L'information $S_2$ est introduite dans la trame à un instant défini de celle-ci (par exemple, la parité du signal $E_1$ à l'instant d'horloge qui précède l'insertion de la voie de service).

Les moyens 52 d'élaboration de la trame fournissent un signal $S_3$ qui est appliqué à un transcodeur 53, chargé d'adapter ce signal $S_3$ à la ligne de transmission. La fonction de codage remplie par ce transcodeur 53 n'est en elle-même pas caractéristique de l'invention. A titre d'exemple, ce transcodeur 53 réalise la transformation du signal binaire $S_3$ en un signal ternaire $S_4$, c'est-à-dire qui peut prendre trois états discrets "-1", "0", "+1". Ce dernier est transmis à un émetteur 54 pour injection dans la ligne de transmission 3.

Le signal $S_4$ est reçu dans un récepteur 55, suivi par un transcodeur 56 ayant pour rôle d'effectuer l'opération inverse du transcodeur 53 et délivrant à sa sortie un signal $S_5$ qui, s'il n'y a pas d'erreurs de transmission, que ce soit au niveau de la ligne 3 ou des éléments 53-55, est identique au signal $S_3$, c'est-à-dire le signal $E_1$ et la voie de service contenant la valeur du signal $S_2$ à l'instant défini précédemment.

Des moyens 57 réalisent une opération inverse (détramage) de celle des moyens 52 pour restituer d'une part un signal $S_1$ et d'autre part un signal $S_7$ qui, en l'absence d'erreur, sont respectivement identiques à $E_1$ et à la valeur de $S_2$ précédente. Il ressort également des moyens 57 un signal $S'_7$ représentant les autres informations contenues dans la voie de service ($S'_2$ à l'émission). Il ressort enfin des moyens 57 un signal $S_9$ de synchronisation, indiquant l'instant où a été prise l'information de $S_2$ pour être insérée dans la voie de service.

Le signal $S_1$ est par ailleurs appliqué à des moyens 58 analogues aux moyens 51, fournissant un signal $S_8$ identique (s'il n'y a

7

pas d'erreurs) au signal $S_2$. Un comparateur 59 reçoit à la fois les signaux $S_7$ et $S_8$, et réalise une comparaison à un instant de la trame où a été prélevée l'information dans $S_2$ pour être injectée dans la voie de service, instant donné par le signal $S_9$. En l'absence d'erreurs, on rappelle qu'on doit avoir $S_7 = S_8$, ce qui correspond à un signal $S_6$ de valeur donnée fourni par le comparateur 59.

Dans le cas où il se produit au moins une erreur sur un bit dans l'un quelconque des blocs ou sur l'une des liaisons, le comparateur 59 fournit un signal $S_6$ de valeur différente.

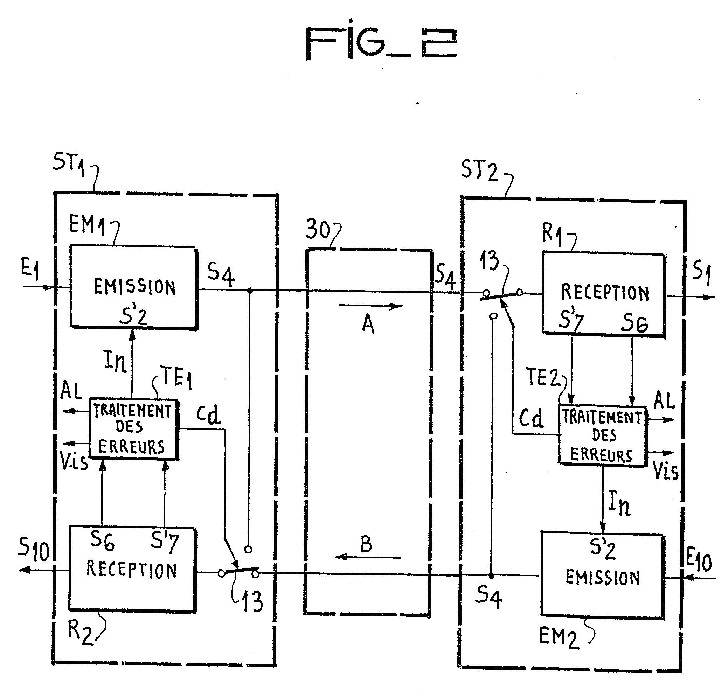

La figure 2 représente un mode de réalisation du dispositif de surveillance de stations terminales d'une ligne de transmission bidirectionnelle selon l'invention.

La voie de transmission, maintenant repérée 30, étant cette fois-ci bidirectionnelle, on a figuré dans la partie supérieure un sens de transmission A et dans la partie inférieure un sens de transmission B. Le fonctionnement de ces sens de transmission est bien entendu symétrique. Aussi, on étudiera plus particulièrement le sens de transmission A, les considérations qui sont valables pour ce sens s'appliquant bien entendu à l'autre sens.

Le système de la figure 2 comporte donc deux stations terminales $ST_1$ et $ST_2$, reliées par la voie de transmission bidirectionnelle 30. Chacune des stations terminales ($ST_1$, $ST_2$) comporte un bloc d'émission (respectivement $EM_1$ et $EM_2$) analogue au bloc $EM_1$ de la figure 1, un bloc de réception (respectivement $R_2$ et $R_1$) analogue au bloc $R_1$ de la figure 1, et un dispositif de traitement des erreurs (respectivement $TE_1$ et $TE_2$). Dans le sens A, la station $ST_1$ émet un signal $E_1$ vers la station $ST_2$ qui délivre un signal $s_1$ ; dans le sens B, la station $ST_2$ émet un signal $E_{10}$ vers la station $ST_1$ qui délivre un signal $S_{10}$.

Dans la première station terminale $ST_1$, le bloc émetteur $EM_1$ réalise les opérations décrites précédemment (figure 1) et fournit le signal $S_4$ appliqué à la ligne 30. Ce signal $S_4$ se retrouve appliqué dans la deuxième station terminale $ST_2$ par l'intermédiaire d'un commutateur 13, en position haute sur la ligne 30 à l'entrée du bloc

récepteur $R_1$, qui réalise également les opérations décrites précédemment (figure 1). Il ressort de ce qui précède que le bloc $R_1$ peut indiquer $(S_6)$ s'il y a eu une erreur dans la transmission du signal $E_1$. Les erreurs ainsi détectées sont appliquées à un dispositif $TE_2$ qui traite ces erreurs et qui, si ces erreurs atteignent un certain taux prédéfini, émet par exemple une alarme (AL) et un signal de visualisation (Vis).

Lorsque le dispositif de traitement $TE_2$ de la station $ST_2$ signale par une alarme un défaut de transmission sur le sens de transmission A, sachant qu'on peut savoir par ailleurs que la ligne de transmission 30 n'est pas directement incriminée, il apparaît qu'à ce stade du traitement l'origine du défaut est indéterminée : en effet, on ne sait pas si c'est l'émetteur $EM_1$ de la station $ST_1$ ou si c'est le récepteur $R_1$ de la station $ST_2$ qui est à mettre en cause. Pour permettre de lever cette indétermination, dans le cas où une erreur est détectée, le dispositif de traitement $TE_2$ délivre un signal de commande Cd de nature à boucler la station $ST_2$ sur elle-même, c'est-à-dire à faire passer le commutateur 13 de la position haute, dans laquelle il se trouvait, à la position basse. Dans cette position basse, d'une part le récepteur $R_1$ est découplé de la ligne de transmission 30 et d'autre part le bloc $R_1$ est couplé à l'émetteur $EM_2$ de cette même station $ST_2$.

On supposera que les deux sens de transmission ne sont pas en panne en même temps et que, au moment du constat du défaut dans le sens de transmission A, le sens de transmission B est réputé fonctionner parfaitement.

Dans cette position du commutateur 13, il apparaît que le signal $S_1$ doit être égal au signal $E_2$. S'il n'est pas égal, donc si le dispositif $TE_2$ indique toujours un défaut parce qu'il reçoit des indications d'erreurs (signal $S_6$), on en déduit que c'est le bloc récepteur $R_1$ de la station $ST_2$ qui est en panne. Si le signal $E_2$ est égal au signal $S_1$, donc si le dispositif $TE_2$ n'indique plus de défaut, on en déduit que c'est au contraire le bloc $EM_1$ de la station $ST_1$ qui est en panne.

Une fois cette comparaison effectuée, le dispositif $TE_2$ délivre une indication (In) précisant quel est, de l'émetteur $EM_1$ ou du récepteur $R_1$, celui qui est en panne. Cette indication In peut bien entendu être transmise par la voie de service du sens B comme cela avait été évoqué précédemment. De même, lors de l'opération de commutation du commutateur 13, le dispositif de traitement $TE_2$ peut envoyer une indication à la première station $ST_1$ indiquant qu'il est en train de tester la station $ST_2$ et que le sens de transmission A est défectueux. Ces différentes informations font partie du signal $S'_2$-$S'_7$ précédent.

En définitive, le dispositif de traitement $TE_2$ de la station $ST_2$ a un comportement de type séquentiel : il effectue dans un premier temps la surveillance permanente du sens A de la ligne de transmission 30. Lorsque ce sens de transmission est jugé défectueux, il commande la commutation du commutateur 13 et analyse alors l'état de fonctionnement du récepteur $R_1$ de la station $ST_2$. Il transmet en dernier lieu l'indication In signalant quel est l'organe défectueux.

Cette disposition est avantageuse à plus d'un titre, notamment dans le cas où une station $ST_2$ est très éloignée de la première station $ST_1$ et n'est pas fréquentée en permanence par des observateurs.

On pourra constater de plus que pendant tout ce traitement d'erreurs, le sens de transmission B n'est pas perturbé et continue à transmettre les signaux $E_{10}$ de la station $ST_2$ vers la station $ST_1$.

10

REVENDICATIONS

1. Dispositif de surveillance d'au moins deux stations terminales, situées respectivement aux extrémités d'une voie de transmission, la première station terminale ($ST_1$) comportant au moins un organe de transcodage (53) recevant le signal numérique codé à transmettre et délivrant un deuxième signal exprimé selon un deuxième codage ; la deuxième station terminale ($ST_2$) comportant au moins un organe de transcodage inverse (56) recevant le deuxième signal et délivrant un troisième signal exprimé selon le codage initial, le dispositif étant caractérisé par le fait que la première station terminale ($ST_1$) comporte en outre des moyens (51) d'élaboration d'un quatrième signal qui est une fonction prédéterminée du signal à transmettre ; que ce quatrième signal est transmis à la deuxième station terminale ($ST_2$) par une voie de service en même temps que le deuxième signal y est transmis par la voie de transmission (3, 30), et que la deuxième station terminale ($ST_2$) comporte en outre des moyens (58) d'élaboration d'un cinquième signal qui est une même fonction prédéterminée du troisième signal et des moyens de comparaison (59) du quatrième signal reçu avec le cinquième signal, fournissant un sixième signal, indiquant une erreur éventuelle de transmission.

2. Dispositif selon la revendication 1, caractérisé par le fait que les moyens (51, 58) d'élaboration de la fonction prédéterminée comportent des moyens d'élaboration de la parité du signal qu'ils reçoivent.

3. Dispositif selon l'une des revendications précédentes, caractérisé par le fait que la première station terminale ($ST_1$) comporte en outre des moyens (52) d'élaboration d'une trame, recevant le signal à transmettre et le quatrième signal, et fournissant à l'organe de transcodage (53) au moins une trame formée du signal à transmettre et de la valeur à un instant prédéfini du quatrième signal, et que la deuxième station terminale (ST$_2$) comporte des moyens (57) de détramage du troisième signal fourni par l'organe de transcodage inverse (56), ces moyens (57) fournissant le signal de sortie de la deuxième station (ST$_2$) correspondant au signal à transmettre, la valeur précédente du quatrième signal aux moyens de comparaison (59) et un septième signal de commande aux moyens de comparaison (59), indiquant à ceux-ci l'instant où doit être réalisée la comparaison.

4. Dispositif selon l'une des revendications précédentes, caractérisé par le fait que la première station (ST$_1$) comporte en outre des moyens d'émission (54) connectés entre l'organe de transcodage (53) et la voie de transmission (3, 30).

5. Dispositif selon l'une des revendications précédentes, caractérisé par le fait que la deuxième station (ST$_2$) comporte en outre des moyens de réception (55) connectés entre la voie de transmission (3, 30) et l'organe de transcodage inverse (56).

6. Dispositif selon l'une des revendications précédentes, caractérisé par le fait que la voie de transmission est bidirectionnelle.

7. Dispositif selon la revendication 6, caractérisé par le fait que la première station (ST$_1$) comporte en outre les mêmes moyens que la deuxième station (ST$_2$), et réciproquement.

8. Dispositif selon la revendication 7, caractérisé par le fait que chacune des stations (ST$_1$, ST$_2$) comporte en outre un dispositif de traitement des erreurs (TE$_1$, TE$_2$) et des moyens de commutation (13), le dispositif de traitement des erreurs commandant ces derniers moyens (13) de sorte que la station concernée soit bouclée sur elle-même dans le cas où les moyens de comparaison (59) indiquent la présence d'une erreur.

12

9. Dispositif selon l'une des revendications 6 à 8, caractérisé par le fait que le signal indiquant une erreur éventuelle de transmission dans un sens est transmis dans l'autre sens via la voie de service.

10. Dispositif selon la revendication 8, caractérisé par le fait qu'un signal indiquant le bouclage sur elle-même d'une des stations est transmis à l'autre station via la voie de service.

1/2

# FIG_1

FIG_2

0093648

Office européen
des brevets

**RAPPORT DE RECHERCHE EUROPEENNE**

Numéro de la demande

EP 83 40 0821

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-4 291 408 (OGAWA et al.) * Colonne 1, ligne 65 - colonne 2, ligne 28; colonne 3, ligne 15 - colonne 4, ligne 20 * | 1,2 | H 04 L 1/24 H 04 L 1/10 |
| | --- | | |
| Y | PHILIPS TELECOMMUNICATION REVIEW, vol. 38, no. 4, novembre 1980, pages 187-194, Hilversum, NL. J. NOORDANUS et al.: "End-to-end supervision of digital radio relay sections" * Page 188, lignes 2-5, 37-43; page 191, lignes 16-29; page 193, lignes 17-21 * | 1-3 | |
| | --- | | |
| Y | FR-A-2 396 475 (RAI RADIOTELEVISIONE ITALIANA) * Page 4, lignes 1-12 * | 1-3 | **DOMAINES TECHNIQUES RECHERCHES (Int. Cl. 3)** |
| | --- | | |
| A | CABLES & TRANSMISSION, vol. 32, no. 4, octobre 1978, pages 517-527, Paris, FR. S. GRANIER et al.: "Système transmic. 6. Raccordement des abonnés à 2,4 - 4,8 et 9,6 kbit/s" * Page 519, lignes 16-18; page 522, ligne 17 - page 523, ligne 15 * | 4-6,8 | H 04 L 1/24 H 04 L 1/10 |
| | --- | | |
| A | EP-A-0 026 135 (L.T.T.) * Page 2, lignes 14-33; figure 2 * | 9 | |
| | ----- | | |

Le présent rapport de recherche a été établi pour toutes les revendications

| Lieu de la recherche LA HAYE | Date d'achèvement de la recherche 03-08-1983 | Examinateur HOLPER G.E.E. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82